# EUROPEAN PATENT APPLICATION

(11) **EP 4 653 365 A1**
(43) Date of publication of application: **26.11.2025**
(21) Application number: 23917348.7
(22) Date of filing: 05.12.2023
(51) Int. Cl.: B65H 49/16, B62B 1/26, B62B 3/04, B25H 3/00, B65H 75/28

(54) **CABLE-CARRYING ELECTRICIAN'S CART AND TOOL**

(30) Priority: 17.01.2023 ES 202330070 U
(71) Applicant: Pérez Prieto, Iván, 08330 Premia de Mar (Barcelona) (ES)
(72) Inventor: Pérez Prieto, Iván, 08330 Premia de Mar (Barcelona) (ES)
(74) Representative: Herrero & Asociados, S.L.
(86) International application number: PCT/ES2023/070729
(87) International publication number: WO 2024/153834

(57) **Abstract**

The invention relates to a cable-carrying electrician's cart and tool that transport electrical material and facilitate the ergonomics and efficiency of work carried out on installations. In particular, the invention allows cable drums to be transported and handled. Furthermore, the invention has a work surface and space for housing both tools and various electrical materials. The invention belongs to the industrial sector related to industrial supplies.

## Description

### Technical field

Dedicated to the industrial sector related to industrial supplies.

### Background

The state of the art includes documents that refer to different trolleys for the convenient and grouped transport of cable reels or boxes containing cable as well as other material commonly used in installations, as shown in patent ES 2180176T3 (European application No. 98924670.7) by Bootsman Holding B.V., where the reels, here called spools, are unwound around their perpendicular axis mounted on the frame. Another known development is shown in the utility model U 200600370 of the holder José Enrique Hijano Ruiz, said trolley has a central mast on which are fixed different reel/coil trays, the trays are coupled in the form of spiral stairs rotating upwards on said mast, which has one or more guide rings.

Patent US3990653A applied for by Jet Line Products Inc. describes a trolley for transporting a number of spiral wire dispensers suspended on the trolley by means of a conical wire structure which is inserted into the coil and at the apex of which there is a clamping element from which a guide is inserted through which the free end of the cable is inserted.

The patent with application number ES2316238 A1 of the holder Grupo general cable S.A. describes a cable trolley equipped with a frame and a hinged door with a series of compartments defined by the frame itself to house the coils in which a cable guide rod can be present, the cables are extracted from the front of the trolley in a grouping device formed by several wire loops. The front exit of the different cables is not practical since they are exposed and it is easier for them to get entangled among them or to get caught when passing near the installer or other elements present at the installation site, since the free end of the cables is not fixed, which as it is known tends to move towards the coil due to the tension that the cables present because of their bending.

The applicant does not know of any technical solutions that solve the above problem in an advantageous manner such as the claimed invention.

### Object

To provide simple and efficient means for transporting electric cable reels, as well as other materials used in installations, improving the efficiency and ergonomics of these works. To provide the electrician's trolley with means to fix the free end of the cable.

### Description of the invention

The works carried out in electrical installations require the use of different cables, varying their sections or color codes. These cables are usually wound in coils, whether or not they are presented in a box. Given its metallic nature, the necessary set of the different coils used in an installation is high and heavy, so it is necessary a suitable transport that also allows the correct organization and independent use of these, thus favoring this type of work.

The electrician's trolley with cable and tool holder comprises a frame and two wheels for its transport, the transport is carried out in a conventional way by tilting the assembly. This frame can accommodate and vary the height by conventional means of at least one tray on which are deposited the coils of electrical cable, the tray has a number of openings designed to serve as a guide to the various cables that pass through it. It presents a working surface parallel to the floor located on its upper face, this surface comprises a plurality of openings of exit of the cable through which the free end of at least one of the coils is extracted, this electrical cable in the case that it is in a tray that has on top one or several of these is allowed to cross them by means of the openings present in them already described.

It has means for fixing the free end that emerges through the cable exit openings, for this the work surface has a plurality of cable fixing openings that cooperate with the first ones in such a way that, introducing the cable in these, from the upper plane of the work surface the cable is bent and fixed, avoiding that it tends to return to the coil. This work surface also includes at least one tool-holding tray to hold material and tools of habitual use, such as, for example, pliers, screwdrivers or insulating tape.

The different trays have separators, not shown, to prevent the movement of the reels when the trolley is tilted during transport.

There are versions in which the trays are removable and adjustable in height by means of conventional techniques, others that include means to know the length of meters extracted by means of a conventional cable counter, either mechanical or digital. Preferably, it includes in its base a load compartment to accommodate heavier or bulky objects, this space can be adjusted by removing one or more trays, as well as by adjusting the height of these.

A lockable cover, not shown, is also provided to protect the work surface and prevent the cable from being used by a third person who does not have the means to open the lock.

### Description of the drawings

For a better understanding of what is described in the present report, some drawings are included in which, by way of example, a list of the figures of the proposed invention is shown.
Figure 1 shows an isometric view of the electrician's trolley, showing: the working surface (1), its cable outlet openings (2), the cable fixing openings (3), the tool-holding tray (8). As can be seen, the electric cable (7) is led from its corresponding reels (5), in this representation in the cable container boxes, through the different reel trays (4) and retained by bending the cable between the openings (2 and 3) described.
Figure 2 shows a side view of the inclined electrician's trolley in its displacement position, it can be seen that in this position the cable boxes do not move.

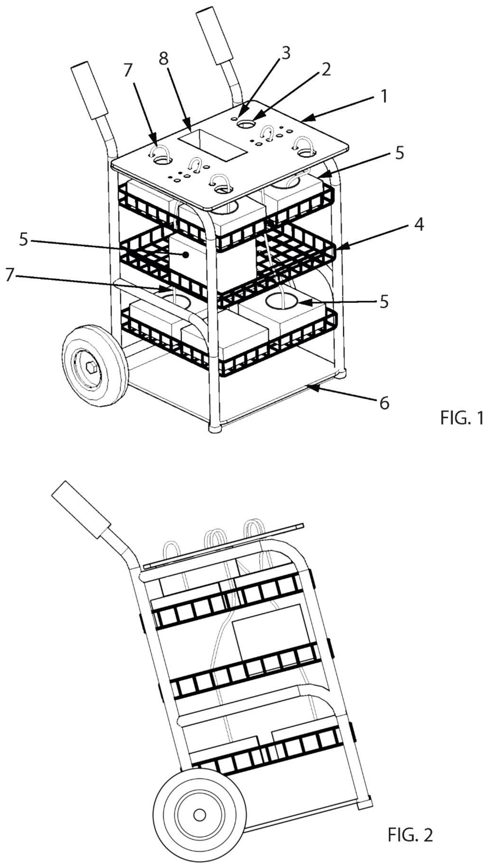

The electrician's trolley for cable and tool holder object of this mode of preferred embodiment comprises of a frame and two wheels for its transport, of at least one reel-holding tray (4) which have spacers to prevent the movement of the reels when the trolley is tilted in its transport, figure 2.

The electric cable of each coil installed can pass through the tray above it as the trays comprise a plurality of openings arranged for this purpose, in the upper plane of the trolley comprises of a flat working surface (1), which presents different through cable exit openings (2), these cooperate for the fixing of the free end of the cable (7) with the cable fixing openings (3), in such a way that the cable, once introduced from the upper face of the latter, is bent and fixed. Figure (1).

To facilitate transport and organization, it has at least one tool tray (8) and a loading compartment (6) close to its base.

### Description of a preferred embodiment

A preferred mode of realization is cited by way of example, the materials used in its manufacture, as well as the methods of application and all accessory details that may arise, provided that they do not affect its essentiality, being independent of the object of the invention.

An cable-carrying electrician's cart and tool holder for transporting electrical equipment for an installation in this preferred embodiment comprises a frame and two wheels for transport, at least one reel tray (4) with spacers to prevent movement of the reels when the trolley is tilted during transport, Figure 2.

The electric cable of each installed reel can pass through the tray above it as the trays comprise a plurality of openings arranged for this purpose, in the upper plane of the carriage comprises of a flat working surface (1), which presents different through cable exit openings (2), these cooperate for the fixing of the free end of the cable (7) with the cable fixing openings (3), in such a way that the cable, once introduced from the upper face of the latter, is bent and fixed. Figure (1).

To facilitate transport and organization, it has at least one tool-holding tray (8) and a loading compartment (6) near its base.

## Claims

1. An cable-carrying electrician's cart and tool holder for transporting electrical equipment for an installation, equipped with a frame and a pair of wheels, **characterized by** having means for housing at least one reel of electrical cable (5), allowing the unrolled of the latter and the fixing of the free end of the cables (7), it comprises a flat working surface (1) located on its upper side, this surface having a plurality of through cable outlet openings (2) cooperating with the cable fixing openings (3) and at least one tool tray (8); of at least one spool tray (4) provided with at least one cable gland opening; of a loading compartment (6) close to its base.

2. Cable-carrying electrician's cart and tool according to the first claim, characterized because its trays are removable and adjustable in height.

3. Cable-carrying electrician's cart and tool according to the previous claims, **characterized in that** it includes a meter counter for the meters of cable extracted.

4. Cable-carrying electrician's cart and tool according to the previous claims, **characterized in that** it includes a lid with a conventional locking system that covers the working surface and the free ends of the electric cables.

## Amended claims

### Amended claims under Art. 19.1 PCT

1. An cable-carrying electrician's cart and tool holder for transporting electrical equipment for an installation, equipped with a frame and a pair of wheels, **characterized by** having means far housing at least one reel of electrical cable (5), allowing the unrolled of the latter and the fixing of the free end of the cables (7), it comprises a flat working surface (1) located on its upper side, this surface having a plurality of through cable outlet openings (2) cooperating with cable fixing openings (3) and at least one tool tray (8); of at least one spool tray (4) provided with at least one cable gland opening; of a loading compartment (6) close to its base.

2. Cable-carrying electrician's cart and tool according to the first claim, characterized because its trays are removable and adjustable in height.

3. Cable-carrying electrician's cart and tool according to the previous claims, **characterized in that** it includes a meter counter for the meters of cable extracted.

4. Cable-carrying electrician's cart and tool according to the previous claims, **characterized in that** it includes a lid with a conventional locking system that covers the working surface and the free ends of the electriccables.
